# FASCICULE DE BREVET EUROPEEN

(11) **EP 3 395 877 B1**
(45) Date de publication et mention de la délivrance du brevet: **13.05.2020**
(21) Numéro de dépôt: 18168270.9
(22) Date de dépôt: 28.03.2012
(51) Int. Cl.: C08L 7/00, C08L 21/00, C07C 281/20, C07F 7/18

(54) **COMPOSITION DE CAOUTCHOUC POUR PNEUMATIQUE COMPORTANT UN AGENT DE COUPLAGE AZOSILANE**
KAUTSCHUKZUSAMMENSETZUNG FÜR REIFEN, DIE EIN AZOSILAN-KUPPLUNGSMITTEL UMFASST
RUBBER COMPOSITION FOR TYRE COMPRISING AN AZOSILANE COUPLING AGENT

(30) Priorité: 01.04.2011 FR 1152831
(43) Date de publication de la demande: 31.10.2018
(62) Demande divisionnaire de: 12711862.8
(73) Titulaire: Compagnie Générale des Etablissements Michelin, 63000 Clermont-Ferrand (FR)
(72) Inventeur: DARNAUD, Christelle, 63040 Clermont-Ferrand Cedex 9 (FR); ARAUJO DA SILVA, José Carlos, 63040 Clermont-Ferrand Cedex 9 (FR); LONGCHAMBON, Karine, 63040 Clermont-Ferrand Cedex 9 (FR); VEYLAND, Anne, 63040 Clermont-Ferrand Cedex 9 (FR)
(74) Mandataire: Bocchi, Brigitte

(56) Documents cités:
- EP-B1- 1 893 681
- EP-B1- 1 893 683

## Description

La présente invention est relative aux compositions d'élastomères diéniques renforcées d'une charge inorganique telle que silice, destinées à la fabrication de pneumatiques ou de produits semi-finis pour pneumatiques, en particulier aux bandes de roulement de ces pneumatiques.

Elle se rapporte plus particulièrement aux agents de couplage destinés à assurer la liaison, dans de telles compositions, entre ces élastomères diéniques et ces charges inorganiques renforçantes.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure.

Ceci a été rendu possible notamment grâce à la mise au point de nouvelles compositions d'élastomères renforcées de charges inorganiques spécifiques qualifiées de "renforçantes", présentant une haute dispersibilité, capables de rivaliser avec le noir de carbone conventionnel du point de vue renforçant, et offrant en outre à ces compositions une hystérèse réduite synonyme d'une plus basse résistance au roulement pour les pneumatiques les comportant. De telles compositions de caoutchouc, comportant des charges inorganiques renforçantes par exemple du type silices ou alumines, ont par exemple été décrites dans les brevets ou demandes de brevet EP 501 227 ou US 5 227 425, EP 735 088 ou US 5 852 099, EP 810 258 ou US 5 900 449, EP 881 252, WO99/02590, WO99/06480, WO00/05300, WO00/05301, WO02/10269. EP1893681 décrit des compositions de caoutchouc à base d'au moins un élastomère isoprénique; une charge inorganique renforçante et un système de couplage comprenant un azosilane.

La mise en œuvre (ou "processabilité") des compositions de caoutchouc contenant de telles charges reste néanmoins plus difficile que pour les compositions de caoutchouc chargées conventionnellement de noir de carbone. En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique/élastomère), on rappelle ici que doit être entendu, de manière connue, un agent apte à établir une connexion suffisante, de nature chimique et/ou physique, entre la charge inorganique et l'élastomère diénique.

Un tel agent de couplage, au moins bifonctionnel, a comme formule générale simplifiée « Y-W- X », dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère diénique, par exemple par l'intermédiaire d'un atome de soufre ;
- W représente un groupe divalent permettant de relier "Y" et "X".

Les agents de couplage ne doivent en particulier pas être confondus avec de simples agents de recouvrement de la charge inorganique qui, de manière connue, peuvent comporter la fonction "Y" active vis-à-vis de la charge inorganique mais sont en tout cas dépourvus de la fonction "X" active vis-à-vis de l'élastomère diénique.

Des agents de couplage, notamment (silice/ élastomère diénique), ont été décrits dans un grand nombre de documents brevet, les plus connus étant des silanes sulfurés bifonctionnels, en particulier des alkoxysilanes, considérés aujourd'hui comme les produits apportant, pour des vulcanisats chargés à la silice, le meilleur compromis en terme de sécurité au grillage, de facilité de mise en oeuvre et de pouvoir renforçant. Parmi ces silanes sulfurés, doit être cité tout particulièrement le tétrasulfure de bis 3-triéthoxysilylpropyle (en abrégé TESPT), agent de couplage de référence dans les pneumatiques à basse résistance au roulement qualifiés de "Pneus Verts" pour l'économie d'énergie offerte (concept *"Energy-saving Green Tyres"*).

On cherche toujours aujourd'hui à améliorer les performances de ces agents de couplage pour charge inorganique telle que silice.

Le besoin est particulièrement présent dans le cas de matrices de caoutchouc à base d'un élastomère isoprénique telles que celles utilisées dans les bandes de roulement de pneumatiques Poids-lourd, dans lesquelles, de manière connue, une liaison efficace avec l'élastomère est beaucoup plus difficile à obtenir comparativement à l'emploi de noir de carbone.

Poursuivant leurs recherches, les Demanderesses ont découvert un nouvel agent de couplage qui, seul mais également en combinaison avec d'autres types d'agents de couplage, permet d'améliorer de manière très sensible les performances de couplage sur un élastomère diénique, et notamment un élastomère isoprénique.
1) L'invention a ainsi pour objet une composition de caoutchouc pour pneumatique à base d'au moins un élastomère diénique, une charge inorganique à titre de charge renforçante, un agent de couplage assurant la liaison entre la charge inorganique et l'élastomère diénique, caractérisée en ce que l'agent de couplage est un composé azosilane choisi parmi les composés suivants :

   (EtO)(RO)₂Si-CH₂-CH₂-CH₂-NH-CO-N=N-CO-NH-CH₂-CH₂-CH₂-Si(OEt)(OR)₂,

   (RO)(EtO)₂Si-CH₂-CH₂-CH₂-NH-CO-N=N-CO-NH-CH₂-CH₂-CH₂-Si(OR)(OEt)₂

   avec Et=éthyle et R=C₁₃H₂₇(OCH₂CH₂)₅.

Préférentiellement, l'élastomère diénique est choisi dans le groupe constitué par les polybutadiènes, les polyisoprènes synthétiques, le caoutchouc naturel, les copolymères de butadiène, les copolymères d'isoprène et les mélanges de ces élastomères.

De préférence, la charge inorganique renforçante est une charge siliceuse ou alumineuse.

L'invention concerne également un pneumatique ou produit semi-fini comportant une composition de caoutchouc telle que décrite ci-dessus, et elle concerne encore une bande de roulement de pneumatique comportant une telle composition de caoutchouc.

### MESURES ET TESTS UTILISES

Les compositions de caoutchouc sont caractérisées, avant et après cuisson, comme indiqué ci-après.

### Essais de traction

Ces essais de traction permettent de déterminer les modules d'élasticité et les propriétés à la rupture et sont basées sur la norme NF ISO 37 de Décembre 2005.
On mesure en seconde élongation (i.e., après un cycle d'accommodation au taux d'extension prévu pour la mesure elle-même) le module sécant nominal (ou contrainte apparente, en MPa, rapportée à la déformation,sans unité) à 100% d'allongement (notés MA100) et à 300% d'allongement (notés MA300).

Les contraintes vraies à la rupture (en MPa) et les allongements à la rupture (en %) sont également mesurés.

### Propriété dynamique

La propriété dynamique tan(δ)ₘₐₓ est mesurée sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, selon la norme ASTM D 1349 - 99. On effectue un balayage en amplitude de déformation de 0,1 à 90% (cycle aller), puis de 90% à 0,1% (cycle retour). Le résultat exploité est le facteur de perte (tan δ). Pour le cycle retour, on indique la valeur maximale de tan δ observée (tan(δ)ₘₐₓ), entre les valeurs à 0,1% et à 50% de déformation (effet Payne).

### DESCRITION DETAILLEE DE L'INVENTION

Les compositions de l'invention sont donc à base d'au moins d'au moins un élastomère diénique, une charge inorganique à titre de charge renforçante et d'un composé azosilane de formule (I) à titre d'agent de couplage charge inorganique/ l'élastomère diénique.

Par l'expression composition "à base de", il faut entendre dans la présente demande une composition comportant le mélange et/ou le produit de réaction des différents constituants utilisés, certains de ces constituants de base (par exemple l'agent de couplage) étant susceptibles de, ou destinés à réagir entre eux, au moins en partie, lors des différentes phases de fabrication des compositions, en particulier au cours de leur vulcanisation (cuisson).

Dans la présente description, sauf indication expresse différente, tous les pourcentages (%) indiqués sont des % en masse.

### Elastomère diénique

Par élastomère ou caoutchouc "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". Par élastomère diénique "essentiellement insaturé", on entend un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di-alkyl(C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

En résumé, de manière particulièrement préférentielle, l'élastomère diénique de la composition conforme à l'invention est choisi dans le groupe des élastomères diéniques (fortement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" (*"non-black filler"*) par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique, en particulier pour bande de roulement ; une telle charge se caractérise généralement, de manière connue, par la présence de groupes hydroxyle (-OH) à sa surface.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en œuvre pour la fabrication de pneumatiques présentant une faible résistance au roulement ; comme exemples de telles silices, on peut citer les silices « Ultrasil 7000 » de la société Degussa, les silices « Zeosil 1165 MP, 1135 MP et 1115 MP » de la société Rhodia, la silice « Hi-Sil EZ150G » de la société PPG, les silices « Zeopol 8715, 8745 ou 8755 » de la Société Huber.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc des bandes de roulement de l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m2/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçante, en particulier une silice, présentant une surface spécifique BET inférieure à 130 m²/g, préférentiellement dans un tel cas comprise entre 60 et 130 m²/g (voir par exemple demandes WO03/002648 et WO03/002649).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçante selon la nature de la charge inorganique utilisée et selon le type de pneumatique concerné, par exemple pneumatique pour moto, pour véhicule de tourisme ou encore pour véhicule utilitaire tel que camionnette ou Poids lourd. De préférence, ce taux de charge inorganique renforçante sera choisi compris entre 20 et 200 pce, plus préférentiellement entre 30 et 150 pce, en particulier supérieur à 50 pce, et plus préférentiellement encore inférieur à 140 pce.

Dans le présent exposé, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Comme exemples de telles charges organiques, on peut citer les charges organiques de polyvinylaromatique fonctionnalisé telles que décrites dans les demandes WO 2006/069792 et WO 2006/069793.

La charge inorganique renforçante peut être utilisée également associée à une charge renforçante organique, en particulier du noir de carbone, par exemple un noir du type HAF, ISAF, SAF, conventionnellement utilisé dans les pneumatiques et particulièrement dans les bandes de roulement des pneumatiques (par exemple noirs N115, N134, N234, N326, N330, N339, N347, N375, ou encore, selon les applications visées, les noirs de séries plus élevées, par exemple N660, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère sous la forme d'un masterbatch (voir par exemple demandes WO 97/36724 ou WO 99/16600).

La quantité de noir de carbone présente dans la charge renforçante totale peut varier dans de larges limites, elle est de préférence inférieure à celle de l'hydroxyde métallique renforçant. Avantageusement, on utilise du noir de carbone en très faible proportion, à un taux préférentiel inférieur à 10 pce. Dans les intervalles indiqués, on bénéficie des propriétés colorantes (agent de pigmentation noire) et anti-UV des noirs de carbone, sans pénaliser par ailleurs les performances typiques apportées par la charge inorganique renforçante. Bien entendu, la composition de l'invention elle peut être totalement dépourvue de noir de carbone.

### Agent de couplage

La présente demande décrit le composé azosilane, utilisé à titre d'agent de couplage ayant pour formule :

(G¹)₃₋ₐ(G²)ₐSi-Z-NH-C(O)-N=N-C(O)-NH-Z-Si(G¹)₃₋ₐ(G²)ₐ (I)

dans laquelle :
- G¹, identiques ou différents, représentent chacun un groupe hydrocarboné monovalent choisi parmi les alkyles, linéaires ou ramifiés, substitués ou non substitués, ayant de 1 à 18 atomes de carbone, les cycloalkyles ou les aryles, substitués ou non substitués, ayant de 5 à 18 atomes de carbone,
- G², identiques ou différents, représentent chacun un groupe hydroxyle ou un groupe monovalent se présentant sous la forme (G³)ₙ-OG¹ dans laquelle G³ est un groupe de liaison divalent comportant de 1 à 18 atomes de carbone et contenant un ou plusieurs hétéroatomes choisi parmi O, S et N, et n est un nombre supérieur ou égal à 0 et inférieur ou égal à 18
- Z représente un groupe de liaison divalent comportant de 1 à 18 atomes de carbone,
- a est égal à 1, 2 ou 3.

Dans la formule (I) ci-dessus, l'homme du métier comprendra immédiatement que la fonction (notée "X" en introduction de la présente demande) destinée à assurer la liaison avec l'élastomère diénique est assurée par le groupement central azodicarbamide (NH-C(O)-N=N-C(O)-NH), tandis que deux fonctions (notées "Y" en introduction de la présente demande) destinées à assurer la liaison avec la charge inorganique renforçante sont assurée par les groupes silylés qui portent au moins un groupe hydroxyle ou hydrolysable fixé sur leur atome de silicium.

Avantageusement, Z peut contenir un ou plusieurs hétéroatomes choisis parmi O, S, N et Si.

De préférence, a est égal à 3.

Avantageusement, Z est choisi parmi les alkylènes en C₁-C₁₈ et les arylènes en C₆-C₁₂, de préférence parmi les alkylènes en C₁-C₁₀, plus préférentiellement Z est choisi parmi les alkylènes en C₁-C₄, et encore plus préférentiellement Z est un propylène.

Selon un mode de réalisation avantageux décrit, n est supérieur ou égal à 1.
De préférence, G³ est un alkylène-oxy en C₁-C₁₂, plus préférentiellement G³ est un alkylène-oxy en C₁-C₄, et encore plus préférentiellement G³ est un éthylène-oxy ou propylène-oxy.

Parmi les composés de la formule (I), la demande décrit particulièrement le composé 1-2 azodicarboxylic acid, bis(3-aminopropyl triethoxysilane)amide de formule (I-a) :

(EtO)₃Si-(CH₂)₃-NH-CO-N=N-CO-NH-(CH₂)₃-Si(OEt)₃,

Le composé azosilane conforme à l'invention, utilisé à titre d'agent de couplage, est choisi parmi les composés de formule respective (I-b) et (I-c) suivantes :

(I-b) : (EtO)(RO)₂Si-CH₂-CH₂-CH₂-NH-CO-N=N-CO-NH-CH₂-CH₂-CH₂-Si(OEt)(OR)₂,

(I-c): (RO)(EtO)₂Si-CH₂-CH₂-CH₂-NH-CO-N=N-CO-NH-CH₂-CH₂-CH₂- Si(OR)(OEt)₂

avec Et=éthyle et R=C₁₃H₂₇(OCH₂CH₂)₅.

Les composés azosilanes de formule (I) :

(G¹)₃₋ₐ(G²)ₐSi-Z-NH-C(O)-N=N-C(O)-NH-Z-Si(G¹)₃₋ₐ(G²)ₐ

(G¹)₃₋ₐ(G²)ₐSi-Z-NH-C(O)-N=N-C(O)-NH-Z-Si(G¹)₃₋ₐ(G²)ₐ,

peuvent être préparés via une réaction d'acylation entre un composé azobiscarboxy de formule (A) :

G⁴-Z'-C(O)-N=N-C(O)-Z'-G⁴

et un composé aminosilane de formule (B) :

(G¹)₃₋ₐ(G²)ₐSi-Z-NH₂

dans laquelle
- Z', identiques ou différents, représentent chacun un atome d'oxygène, un radical NH or N-A¹, où A¹ est un groupe alkyle ou aryle en C1-C12,
- G⁴, identiques ou différents, représentent chacun un atome d'hydrogène, un groupe alkyle en C1-C18, un groupe benzyle (-CH₂-C₆H₅) ou un groupe alkyle (CH₂-CH₂-O)ₚ- G⁵ or (CH(CH₃)-CH₂-O)ₚ-G⁵, où p est compris entre 1 to 18 et G⁵, identiques ou différents, représentent une chaîne hydrocarbonée monovalente, saturée ou insaturée, ramifiée ou non, en C1-C32.

Les aminosilanes de formule générale B peuvent être produits par trans-estérification d'aminosilanes également de formule B dans laquelle G² est un groupe OH, un groupe alcoxyle C1-C18 substitué ou non, un groupe alcoxyle ou un groupe cycloalcoxyle en C5-C18, avec un groupe HO(CH2-CH2-O)n-R3 ou HO(CH(CH3)-CH2-O)n-R3, telle que notamment décrite dans le brevet européen EP 1285926.

La réaction d'acylation est réalisée préférentiellement en présence d'un solvant, notamment un solvant non alcoolique, sous atmosphère atmosphère inerte, à une tempérture préférentiellment comprise entre -25°c et 25°C.

Selon un mode de réalisation de l'invention, la composition comprend un deuxième agent de couplage utilisé en coupage avec le composé azosilane de formule (Ib) ou (Ic).

Pour ce deuxième agent de couplage conviennent particulièrement les composés silanes sulfurés répondant à la formule (II):

(II) Y¹-Z¹-Sₓ-Z²-Y²

dans laquelle:
- x est un nombre décimal allant de 2 à 8, de préférence de 2 à 5 ;
- Z¹ et Z², identique ou différents, représentent chacun un radical hydrocarboné divalent comportant de 1 à 18 atomes de carbone ;
- Y¹ et Y², identique ou différents, répondent chacun à l'une des formules ci-après: 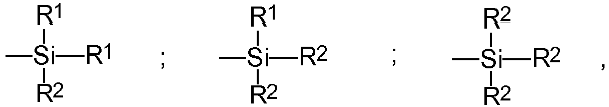 dans lesquelles :
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ ;
   - les radicaux R², substitués ou non substitués, identiques ou différents entre eux, représentent un groupe hydroxyle, alkoxyle en C₁-C₁₈ ou cycloalkoxyle en C₅-C₁₈.

De préférence, Z¹ et Z² sont choisis dans le groupe constitué par les alkylènes en C₁-C₁₀, de préférence en C₁-C₄, et plus préférentiellement Z¹ et Z² représentent le propylène.

Selon une variante de réalisation de l'invention, les radicaux R¹ sont choisis parmi les alkyles en C₁-C₄, de préférence représentent le méthyle.

Selon une autre variante de réalisation de l'invention, les radicaux R² sont choisis dans le groupe constitué par l'hydroxyle et les alkoxyles en C₁-C₄, de préférence dans le groupe constitué par hydroxyle, méthoxyle et éthoxyle.

L'homme du métier saura ajuster la teneur en composé azosilane en fonction des modes de réalisation particuliers de l'invention, notamment de la quantité de charge inorganique renforçante utilisée, le taux préférentiel représentant entre 2% et 20% en poids par rapport à la quantité de charge inorganique renforçante ; des taux inférieurs à 15% sont plus particulièrement préférés.
Ainsi de préférence, le taux global d'agent de couplage étant compris entre 2 et 15 pce, de préférence entre 2 et 12 pce.

### Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en œuvre susceptibles de manière connue, grâce à une amélioration de la dispersion de la charge inorganique dans la matrice de caoutchouc et à un abaissement de la viscosité des compositions, d'améliorer leur faculté de mise en œuvre à l'état cru, ces agents étant par exemple des silanes hydroxylés ou hydrolysables tels que des alkylalkoxysilanes (notamment des alkyltriéthoxysilanes), des polyols, des polyéthers (par exemple des polyéthylèneglycols), des esters, des amines primaires, secondaires ou tertiaires (par exemple des trialcanol-amines), des POS hydroxylés ou hydrolysables, des mélanges de tels composés, par exemple des α,ω-dihydroxy-polyorganosiloxanes (notamment des α,ω-dihydroxy-polydiméthylsiloxanes), des acides gras comme par exemple l'acide stéarique.

A la charge renforçante précédemment décrite, c'est-à-dire la charge inorganique renforçante plus du noir de carbone le cas échéant, peuvent être également ajoutés, en fonction de l'application visée, des charges inertes (i.e., non renforçantes) telles que particules d'argile, bentonite, talc, craie, kaolin, utilisables par exemple dans des flancs ou des bandes de roulement de pneumatique colorés.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC"), 1-phényl-2,4-dithiobiuret ("DTB"), dibuthylphosphorodithioate de zinc ("ZBPD"), 2-éthylhexylphosphorodithioate de zinc ("ZDT/S"), disulfure de bis O,O-di(2-éthylhexyl)-thiophosphonyle ("DAPD"), dibutylthiourée ("DBTU"), isopropyl-xanthate de zinc ("ZIX"), le dialkyl dithiophosphate de zinc,le dilakyldithiophosphate de cuivre, les polysulfures de dialkyl thiophosphoryle, les dérivés dialkil dithiophosphoryl, les dérivés dialkyl dithiophosphoryl (tels que les sels de sinc, de cobalt, les polysulfides...) et les mélanges de ces composés.

### Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, à savoir la charge inorganique renforçante, l'agent de couplage de formule (I) et le noir de carbone sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en œuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

L'incorporation de l'agent de recouvrement, le cas échéant, peut être réalisée en totalité pendant la phase non-productive (i.e., dans le mélangeur interne), en même temps que la charge inorganique, ou bien en totalité pendant la phase productive (au mélangeur externe), ou encore fractionnée sur les deux phases successives.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e., avant cuisson) qu'à l'état dit "cuit" ou vulcanisé (i.e., après réticulation ou vulcanisation). Les compositions conformes à l'invention peuvent être utilisées seules ou en coupage (i.e., en mélange) avec toute autre composition de caoutchouc utilisable pour la fabrication de pneumatiques.

### EXEMPLES DE REALISATION DE L'INVENTION

### Synthèse de l'azosilane de formule (I-a)

### Ingrédients de base :

- azodicarboxylate diisopropylique (Jayhawk Chemicals) avec une pureté supérieur à 94% ;
- 3-aminopropyl(triethoxy-silane)commercialisé par la société Evonik Degussa GmbH vec une pureté supérieure à 98% ;
- Pentane et isopropanol commercialisés par la société Aldrich, Acros et Merck-Schuchardt.

On utilise 164.2 g (mmol 742) de 3-aminopropyl(triethoxy-silane) en tant que charge initiale dans 1000g de pentane à 0°C dans un flacon sous atmosphère inerte, et on agite. On ajoute 75 g d'azodicarboxylate diisopropylique (DIAD, 371 mmol) goutte-à-goutte de -5°C à 5°C, à la solution pendant une période de 30. L"agitation est poursuivie pendant 30 minutes supplémentaires de -5°C à 5°C. Le bain de refroidissement est alors enlevé et la solution est agitée pendant 180 minutes, jusqu'à ce que la température du mélange atteigne la température ambiante. Tous les composés volatiles (pentane, isopropanol) sont alors enlevés sur un évaporateur rotatif à une pression allant jusqu'à 6 mbar.
Les études RMN prouvent que l'huile rouge obtenue (194 g, rendement supérieur à 99%) comporte de l'azosilane à une pureté supérieure à 85 mol%.

### Synthèse de l'azosilane de formule (I-c)

Sous atmosphère d'argon, une trans-estérification de 100 g de 3-aminopropyl(triethoxy-silane) (451 mmol) est réalisée à 130°C avec le poly(oxyéthylene) d'isotridécanol (903 mmol). L'éthanol formé (903 mmol) est distillé sous vide (400 mbar abs). Le silane résiduel est alors dissous dans du n-pentane et refroidi à 0 °C. Une acylation est alors conduite sous agitation avec du DIAD (Diisopropylazodicarboxylate; ratio molaire 1:2 DIAD/silane) tout en maintenant la solution sous agitation et la temperature entre -5°C et 5°C. Ensuite, la solution est agitée pendant 30 min à 0°C puis à temperature ambiante pendant 180 min. Le pentane et l'isopropanol sont ensuite évaporés à l'évaporateur rotatif sous vide (jusqu'à 6 mbar abs).

L'azosilane est obtenu avec un rendement supérieur à 99% e présente sous forme d'un liquide visqueux rouge lumineux avec une pureté de l'azosilane supérieure à 85 mol% (RMN).

### Synthèse de l'azosilane de formule (I-b)

Le Composé azosilane de formule (I-b) est synthétisé d'une façon identique à celle de l'azosilane de formule (I-c) décrit dans le paragraphe précédent à l'exception pour la trans-estérification de la quantité de poly(oxyethylène) d'isotridecanol utilisée qui est divisée par deux par rapport à la synthèse précédemment décrite.

### Synthèse de l'azosilane de formule (III)

L'azosilane de formule (III)

(C₂H₅O)₃Si-(CH₂)₃-NH-CO-N=N-CO-O-C₂H₅

est synthétisé en deux étapes, conformément au mode de réalisation décrit dans le brevet EP 1 893 681, comme suit :
- par réaction d'un silane isocyanate sur un éthyl carbazate pour formation d'un précurseur hydrazino, selon le schéma réactionnel suivant :

   (C₂H₅O)₃Si-(CH₂)₃-NCO + H₂N-NH-CO-O-C₂H₅ → (C₂H₅O)₃Si-(CH₂)₃-NH-CO-NH-NH-CO-O-C₂H₅
- puis oxydation du précurseur ci-dessus pour obtention du composé Ethyl-N-(3-triéthoxysilylpropyl)carbamoylazoformate.

### - Synthèse de l'ingrédient précurseur :

### a) charges :

| | | |
|---|---|---|
| Isocyanatopropyltriéthoxysilane à 96% | 99,8 g | 384 mmol |
| Carbazate d'éthyle | 41,2 g | 384 mmol |
| Toluène Anhydre | 384 ml | - |

### b) protocole opératoire :

Le carbazate d'éthyle et le toluène anhydre sont chargés à température ambiante (23°C) dans le réacteur qui est mis sous atmosphère d'argon. Le réacteur est mis sous agitation à 300 tours/min et le mélange réactionnel est ensuite chauffé à 60°C. Le mélange réactionnel devient pratiquement homogène à chaud. Les 99,8 g de silane sont ensuite additionnés en 60 min à l'aide d'une ampoule de coulée isobare. Le mélange réactionnel est maintenu 2 heures sous agitation à 60°C avant retour à température ambiante. Le mélange réactionnel est laissé au repos quelques heures à température ambiante. Un solide blanc cristallise. Il est ensuite filtré, lavé par 2 fois 150 ml d'éther isopropylique puis essoré sous vide. Le solide est finalement mis à séché à l'étuve à 60°C jusqu'à poids constant égal à 131,5 g. Le produit est analysé par RMN (pureté molaire > 99%). Rendement = 97,4%.

### - Synthèse du composé de formule III (azosilane final) :

L'azosilane de formule III est obtenu en une étape à partir du précurseur par oxydation de la fonction hydrazino en fonction azo utilisant un système oxydant à base de N-Bromosuccinimide (NBS) et de pyridine ajoutés en quantités stœchiométriques par rapport au précurseur.

### a) charges :

| | | |
|---|---|---|
| Précurseur | 20,0 g | 57 mmol |
| N-Bromosuccinimide 99% | 10,13 g | 57 mmol |
| Pyridine | 4,5 g | 57 mmol |
| Dichlorométhane | 100 ml | - |

### b) protocole opératoire :

Le précurseur, la pyridine et le dichlorométhane sont chargés dans un réacteur qui est mis sous atmosphère d'argon ; le milieu réactionnel est homogène pratiquement incolore. Le N-Bromosuccinimide est ajouté en 30 minutes à la spatule. La température est maintenue inférieure à 25°C. Dès le premier ajout de NBS, le milieu réactionnel devient orange vif. Le milieu réactionnel est maintenu sous agitation à température ambiante pendant 2 heures après la fin de l'addition du NBS. Le milieu réactionnel est concentré sous pression réduite à l'évaporateur rotatif.

Le résidu, qui se présente sous la forme d'une pâte orangée, est repris par 100 ml d'un mélange heptane/iPr₂O (1/1 : vol/vol) puis filtré sur verre fritté (125 ml) de porosité 4. Le gâteau de filtration est lavé par 4 fois 25 ml supplémentaires du mélange de solvant précédent. Les eaux-mères sont filtrées une seconde fois sur le gâteau. Le filtrat est concentré sous pression réduite. Un liquide orange vif inodore est obtenu : m = 18,8 g.

Ce liquide est analysé par RMN, sa composition molaire est la suivante (% en mole) :
- azosilane de formule III : 94,5% ;
- composé précurseur : 0,2% ;
- succinimide : 5% ;
- résidus pyridiniques : 0,3%.

### Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique, la silice complétée par une faible quantité de noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 50°C, en mélangeant le tout (phase productive) pendant environ 5 à 6 min
Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### Essai 1

Cet essai a pour but de démontrer les propriétés améliorées d'une composition de caoutchouc comportant un nouvel agent de couplage comparée à une composition témoin utilisant un agent de couplage traditionnellement utilisé dans les compositions de caoutchouc pour bandes de roulement de pneumatiques ayant de la silice à titre de charge renforçante.

On prépare pour cela quatre compositions à base d'un élastomère diénique (caoutchouc naturel, NR) renforcées d'une silice hautement dispersible (HDS), ces compositions différant essentiellement par les caractéristiques techniques qui suivent :
- la composition C1 est une première composition témoin contenant le composé TESPT (nom commercial : « Si69 ») à titre d'agent de couplage,
- la composition C2 est une composition comportant le composé azosilane de formule (I-a) à titre d'agent de couplage avec un nombre de moles identiques à celui du TESPT de la première composition témoin (taux isomolaire en silicium), la structure des molécules de TESPT présentant le même nombre de fonctions assurant la liaison avec la charge et avec l'élastomère que l'agent de couplage de formule (I-a),
- la composition C3 est une deuxième composition témoin contenant le composé azosilane de formule (III), voir ci-dessous, à titre d'agent de couplage mais dans laquelle la quantité d'agent de couplage a été ajustée de sorte d'être à isomole par rapport à la quantité d'agent de couplage de formule (I-a) de la composition C2, en terme de groupe fonctionnel assurant la liaison à la charge inorganique (taux isomolaire en silicium).

L'agent de couplage conventionnel utilisé dans la composition témoin C1 est le TESPT. On rappelle que le TESPT est le tétrasulfure de bis(3-triéthoxysilylpropyl) ayant pour formule développée (Et = éthyle) :

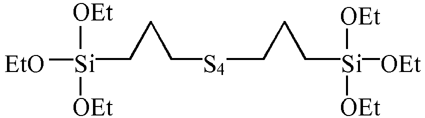

L'agent de couplage conventionnel utilise dans les compositions témoin C3 et C'3 est le l'azosilane de formule développée (III) (Et = éthyle) :

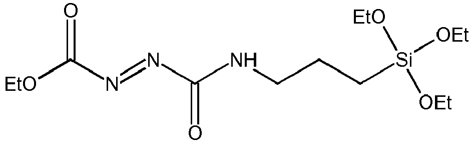

Les tableaux 1 et 2 donnent la formulation des différentes compositions (tableau 1 - taux des différents produits exprimés en pce ou parties en poids pour cent parties d'élastomère) ainsi que leurs propriétés après cuisson (environ 25 min à 150°C) ; le système de vulcanisation est constitué par soufre et sulfénamide.

L'examen des résultats du tableau 2 montre tout d'abord que la composition C2, comportant un agent de couplage de formule (I-a), comparée à la composition témoin C1 comportant l'agent de couplage TESPT, présente des propriétés significativement améliorées concernant le renforcement de la composition (MA300/MA100) et également l'hystérèse (valeurs de tan(δ)ₘₐₓ nettement diminuée), tout en maintenant des propriétés quasi similaires en terme de propriétés à la rupture (contrainte et allongement à la rupture).

Par ailleurs, la comparaison de la composition C3 non-conforme à l'invention, comportant un autre agent de couplage de formule avec un taux correspondant par rapport à la composition C2, à un nombre identique de fonctions assurant la liaison avec la charge, présente à la fois des propriétés d'allongement à la rupture dégradées et de renforcement dégradées (en particulier le module MA300 n'est pas mesurable).

### Essai 2

Cet essai a pour but de démontrer les propriétés améliorées d'une composition de caoutchouc comportant le nouvel agent de couplage en coupage avec un autre agent de couplage traditionnellement utilisé dans les compositions de caoutchouc pour bandes de roulement de pneumatiques ayant de la silice à titre de charge renforçante, comparée à une composition témoin comprenant cet agent de couplage traditionnellement utilisé seul ainsi qu'à une composition comprenant un couplage de deux agents de couplage traditionnellement utilisés.

On prépare pour cela quatre compositions à base d'un élastomère diénique (caoutchouc naturel, NR) renforcées d'une silice hautement dispersible (HDS), ces compositions différant essentiellement par les caractéristiques techniques qui suivent :
- la composition C'1 est identique à la composition C1 de l'essai 1 à l'exception du taux de l'agent de couplage TESPT,
- la composition C4 est une composition comportant à titre d'agent de couplage un coupage constitué de 50% de composé TESPT par rapport au taux de TESPT dans la composition C'1, et de composé azosilane de formule (I-a) avec un taux isomolaire en silicium par rapport à ces 50% de TESPT,
- la composition C5 est une deuxième composition témoin comportant à titre d'agent de couplage un coupage constitué par de 50% de composé TESPT par rapport au taux de TESPT dans la composition C'1 et un composé azosilane de formule (III) avec un taux isomolaire par rapport à la quantité d'agent de couplage de formule (I-a) de la composition C4, en terme de groupe fonctionnel assurant la liaison à la charge inorganique (taux isomolaire en silicium),

Les tableaux 3 et 4 donnent la formulation des différentes compositions (tableau 3 - taux des différents produits exprimés en pce ou parties en poids pour cent parties d'élastomère) ainsi que leurs propriétés après cuisson (environ 25 min à 150°C) ; le système de vulcanisation est constitué par soufre et sulfénamide.

Le tableau 4 montre que la composition C4, comportant à titre d'agent de couplage un coupage d'agent de couplage de formule (I-a) et de composé TESPT, comparée à la composition témoin C'1 comportant l'agent de couplage TESPT seul ainsi qu'à la composition C5 comportant un coupage de composé azosilane de formule (III) et de composé TESPT, présente :
- des propriétés significativement améliorées concernant le renforcement de la composition (MA300/MA100) par rapport à la composition C'1 et du même ordre de grandeur que pour la composition C5,
- des propriétés significativement améliorées concernant l'hystérèse (valeurs de tan(δ)ₘₐₓ nettement diminuée) vis-à-vis des deux compositions C'1 et C5,
- et des propriétés à la rupture très proches de celles de la composition C'1, contrairement à la composition C5 qui présente des propriétés à la rupture (contrainte et allongement à la rupture) dégradées par rapport à la composition C1.

### Essai 3

Cet essai a pour but de démontrer les propriétés améliorées de compositions de caoutchouc conformes à l'invention comportant un nouvel agent de couplage comparées à une composition témoin utilisant un agent de couplage traditionnellement utilisé dans les compositions de caoutchouc pour bandes de roulement de pneumatiques ayant de la silice à titre de charge renforçante.

On prépare pour cela trois compositions à base d'un élastomère diénique (caoutchouc naturel, NR) renforcées d'une silice hautement dispersible (HDS), ces compositions différant essentiellement par les caractéristiques techniques qui suivent :
- la composition C'1 est une composition identique à la composition C'1 de l'essai 2, contenant l'agent de couplage TESPT,
- la composition C6 est une composition conforme à l'invention comportant le composé azosilane de formule (I-b) à titre d'agent de couplage avec un nombre de moles identiques à celui du TESPT de la première composition témoin (taux isomolaire en silicium),
- la composition C7 est une composition conforme à l'invention comportant le composé azosilane de formule (I-c) à titre d'agent de couplage avec un nombre de moles identiques à celui du TESPT de la première composition témoin (taux isomolaire en silicium),

Les tableaux 5 et 6 donnent la formulation des différentes compositions (tableau 5 - taux des différents produits exprimés en pce ou parties en poids pour cent parties Le tableau 6 montre que les compositions C6 et C7 conformes à l'invention, comportant à titre d'agent de couplage respectivement un agent de couplage de formule (I-b) et un agent de couplage de formule (I-c), comparée à la composition témoin C'1 comportant l'agent de couplage TESTP, présentent des propriétés très significativement améliorées concernant le renforcement de la composition (MA300/MA100) mais également concernant l'hystérèse (valeurs de tan(δ)ₘₐₓ nettement diminuée).

Il apparaît clairement qu'une composition conforme à l'invention comportant à titre d'agent de couplage un composé azosilane de formule (Ib/Ic) seul ou en coupage notamment avec un autre agent de couplage traditionnellement utilisé dans les compositions pour pneumatique, permet d'obtenir des propriétés améliorées (renforcement, hystérèse) par rapport aux compositions témoins. Les compositions C6 et C7 sont conformes à l'invention.

**Tableau 1**

| **Composition N°** | **C1** | **C2** | **C3** |
|---|---|---|---|
| NR (1) | 100 | 100 | 100 |
| Silice (2) | 55 | 55 | 55 |
| agent de couplage (3) | 5 | - | - |
| agent de couplage (4) | - | - | 7 |
| agent de couplage (5) | - | 5,2 | - |
| noir de carbone (6) | 3 | 3 | 3 |
| paraffine | 1 | 1 | 1 |
| anti-oxydant (7) | 1,5 | 1,5 | 1,5 |
| TMQ (8) | 1 | 1 | 1 |
| ZnO (9) | 2,7 | 2,7 | 2,7 |
| acide stéarique (10) | 2,5 | 2,5 | 2,5 |
| soufre | 1,5 | 1,5 | 1,5 |
| accélérateur (11) | 1,8 | 1,8 | 1,8 |

| | | | |
|---|---|---|---|
| (1) Caoutchouc naturel ; (2) silice "ZEOSIL 1165 MP" de la société Rhodia sous forme de microperles (BET et CTAB : environ 150-160 m2/g) ; (3) TESPT ("SI69" de la société Evonik-Degussa) ; (4) Composé azosilane de formule III ; (5) Composé azosilane de formule (I-a) (6) N234 (société Evonik-Degussa) ; (7) N-1,3-diméthylbutyl-N-phényl-para-phénylènediamine ("Santoflex 6-PPD" de la société Flexsys) ; (8) TMQ (9) oxyde de zinc (grade industriel - société Umicore) (10) Acide stéarique ("Pristerene 4931" - société Uniqema) ; (11) N-cyclohexyl-2-benzothiazyl-sulfénamide ("Santocure CBS" de la société Flexsys). | | | |

**Tableau 2**

| **Composition N°** | **C1** | **C2** | **C3** |
|---|---|---|---|
| *Propriétés après cuisson* | | | |
| Allongement rupture (%) 60°C | 636 | 504 | 189 |
| Contrainte rupture (MPa) 60°C | 25,4 | 24,0 | 8,0 |
| MA300 / MA100 23°C | 0,95 | 1,46 | * |
| tan(δ)ₘₐₓ 60°C | 0,175 | 0,127 | 0,130 |

| | | | |
|---|---|---|---|
| * non mesurable | | | |

**Tableau 3**

| **Composition N°** | **C'1** | **C4** | **C5** |
|---|---|---|---|
| NR (1) | 100 | 100 | 100 |
| Silice (2) | 55 | 55 | 55 |
| agent de couplage (3) | 5,5 | 2,8 | 2.8 |
| agent de couplage (4) | - | - | 3,9 |
| agent de couplage (5) | - | 2,9 | - |
| noir de carbone (6) | 3 | 3 | 3 |
| paraffine | 1 | 1 | 1 |
| anti-oxydant (7) | 1,5 | 1,5 | 1,5 |
| TMQ (8) | 1 | 1 | 1 |
| ZnO (9) | 2,7 | 2,7 | 2,7 |
| acide stéarique (10) | 2,5 | 2,5 | 2,5 |
| soufre | 1,5 | 1,5 | 1,5 |
| accélérateur (11) | 1,8 | 1,8 | 1,8 |

**Tableau 4**

| **Composition N°** | **C'1** | **C4** | **C5** |
|---|---|---|---|
| *Propriétés après cuisson* | | | |
| Allongement rupture (%) 60°C | 617 | 559 | 513 |
| Contrainte rupture (MPa) 60°C | 24.6 | 25,3 | 23,0 |
| MA300 / MA100 23°C | 0,97 | 1,26 | 1,28 |
| tan(δ)ₘₐₓ 60°C | 0,180 | 0,137 | 0,143 |

**Tableau 5**

| **Composition N°** | **C'1** | **C6** | **C7** |
|---|---|---|---|
| NR (1) | 100 | 100 | 100 |
| Silice (2) | 55 | 55 | 55 |
| agent de couplage (3) | 5,5 | - | - |
| agent de couplage (12) | - | 13 | - |
| agent de couplage (13) | - | - | 20,6 |
| noir de carbone (6) | 3 | 3 | 3 |
| paraffine | 1 | 1 | 1 |
| anti-oxydant (7) | 1,5 | 1,5 | 1,5 |
| TMQ (8) | 1 | 1 | 1 |
| ZnO (9) | 2,7 | 2,7 | 2,7 |
| acide stéarique (10) | 2,5 | 2,5 | 2,5 |
| soufre | 1,5 | 1,5 | 1,5 |
| accélérateur (11) | 1,8 | 1,8 | 1,8 |

| | | | |
|---|---|---|---|
| (12) Composé azosilane de formule (I-b) (13) Composé azosilane de formule (I-c) | | | |

**Tableau 6**

| **Composition N°** | **C'1** | **C6** | **C7** |
|---|---|---|---|
| *Propriétés après cuisson* | | | |
| MA300 / MA100 23°C | 0,93 | 1,46 | 1,49 |
| tan(δ)ₘₐₓ 60°C | 0,177 | 0,084 | 0,073 |

## Revendications

1. Composition de caoutchouc pour pneumatique à base d'au moins un élastomère diénique, une charge inorganique à titre de charge renforçante, un agent de couplage assurant la liaison entre la charge inorganique et l'élastomère diénique, **caractérisée en ce que** l'agent de couplage est un composé azosilane choisi parmi les composés suivants :
(EtO)(RO)₂Si-CH₂-CH₂-CH₂-NH-CO-N=N-CO-NH-CH₂-CH₂-CH₂-Si(OEt)(OR)₂,
(RO)(EtO)₂Si-CH₂-CH₂-CH₂-NH-CO-N=N-CO-NH-CH₂-CH₂-CH₂-Si(OR)(OEt)₂
avec Et=éthyle et R=C₁₃H₂₇(OCH₂CH₂)₅.

2. Composition selon la revendication 1, dans laquelle l'élastomère diénique est choisi dans le groupe constitué par les polybutadiènes, les polyisoprènes synthétiques, le caoutchouc naturel, les copolymères de butadiène, les copolymères d'isoprène et les mélanges de ces élastomères.

3. Composition selon l'une quelconque des revendications précédentes, dans laquelle la charge inorganique renforçante est une charge siliceuse ou alumineuse.

4. Composition selon l'une quelconque des revendications précédentes, dans laquelle la quantité de charge inorganique renforçante est supérieure à 50 pce, de préférence inférieure à 140 pce.

5. Composition selon l'une quelconque des revendications 1 à 4, qui comprend un deuxième agent de couplage.

6. Composition selon la revendication 5, dans laquelle le deuxième agent de couplage est constitué par un composé silane sulfuré répondant à la formule (II):
(II) Y¹-Z¹-Sₓ-Z²-Y²
dans laquelle:
- x est un nombre de 2 à 8, de préférence de 2 à 5 ;
- Z¹ et Z², identique ou différents, représentent chacun un radical hydrocarboné divalent comportant de 1 à 18 atomes de carbone ;
- Y¹ et Y², identique ou différents, répondent chacun à l'une des formules ci-après: 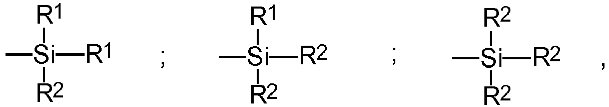 dans lesquelles :
- les radicaux R¹, substitués ou non substitués, identiques ou différents entre eux, représentent un groupe alkyle en C₁-C₁₈, cycloalkyle en C₅-C₁₈ ou aryle en C₆-C₁₈ ;
- les radicaux R², substitués ou non substitués, identiques ou différents entre eux, représentent un groupe hydroxyle, alkoxyle en C₁-C₁₈ ou cycloalkoxyle en C₅-C₁₈.

7. Composition de caoutchouc selon la revendication 6, dans laquelle Z¹ et Z² sont choisis dans le groupe constitué par les alkylènes en C₁-C₁₀, de préférence en C₁-C₄.

8. Composition de caoutchouc selon la revendication 7, dans laquelle Z¹ et Z² représentent le propylène.

9. Composition selon l'une quelconque des revendications 6 à 8, les radicaux R¹ sont choisis parmi les alkyles en C₁-C₄, de préférence représentant le méthyle.

10. Composition selon l'une quelconque des revendications 6 à 9, les radicaux R² sont choisis dans le groupe constitué par l'hydroxyle et les alkoxyles en C₁-C₄, de préférence dans le groupe constitué par hydroxyle, méthoxyle et éthoxyle.

11. Composition selon l'une quelconque des revendications précédentes, dans laquelle le taux global d'agent de couplage représente entre 2% et 20% en poids par rapport à la quantité de charge inorganique renforçante; de préférence ce taux est inférieur à 15%.

12. Composition selon l'une quelconque des revendications précédentes, dans laquelle le taux global d'agent de couplage est compris entre 2 et 15 pce, de préférence entre 2 et 12 pce.

13. Composition de caoutchouc selon l'une quelconque des revendications précédentes, qui comprend un agent de recouvrement choisi dans le groupe constitué par les silanes hydroxylés ou hydrolysables, les polyols, les polyéthers, les esters, les amines, les polysiloxanes hydroxylés ou hydrolysables, et les mélanges de tels composés.

14. Composition selon la revendication 11, dans laquelle l'agent de recouvrement est une huile α,ω-(dihydroxy)-polyorganosiloxane.

15. Pneumatique ou produit semi-fini comportant une composition de caoutchouc selon l'une quelconque des revendications 1 à 12.

16. Bande de roulement de pneumatique comportant une composition de caoutchouc selon l'une quelconque des revendications 1 à 12.

## Patentansprüche

1. Kautschukzusammensetzung für Reifen auf der Basis von mindestens einem Dienelastomer, einem anorganischen Füllstoff als verstärkendem Füllstoff und einem Kupplungsmittel, das die Bindung zwischen dem anorganischen Füllstoff und dem Dienelastomer gewährleistet, **dadurch gekennzeichnet, dass** es sich bei dem Kupplungsmittel um eine Azosilanverbindung handelt, die aus den folgenden Verbindungen ausgewählt ist:
(EtO)(RO)₂Si-CH₂-CH₂-CH₂-NH-CO-N=N-CO-NH-CH₂-CH₂-CH₂-Si(OEt)(OR)₂,
(RO)(EtO)₂Si-CH₂-CH₂-CH₂-NH-CO-N=N-CO-NH-CH₂-CH₂-CH₂-Si(OR)(OEt)₂,
wobei Et = Ethyl und R = C₁₃H₂₇(OCH₂CH₂)₅.

2. Zusammensetzung nach Anspruch 1, wobei das Dienelastomer aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

3. Zusammensetzung nach einem der vorhergehenden Ansprüche, wobei es sich bei dem verstärkenden anorganischen Füllstoff um einen silicium- oder aluminiumhaltigen Füllstoff handelt.

4. Zusammensetzung nach einem der vorhergehenden Ansprüche, wobei die Menge an verstärkendem anorganischem Füllstoff mehr als 50 phe und vorzugsweise weniger als 140 phe beträgt.

5. Zusammensetzung nach einem der Ansprüche 1 bis 4, die ein zweites Kupplungsmittel umfasst.

6. Zusammensetzung nach Anspruch 5, wobei das zweite Kupplungsmittel aus einer Schwefelsilanverbindung besteht, die der Formel (II) entspricht:
(II) Y¹ - Z¹ - Sₓ - Z² - Y²,
in der:
- x für eine Zahl von 2 bis 8 und vorzugsweise 2 bis 5 steht;
- Z¹ und Z², die gleich oder verschieden sind, jeweils für einen zweiwertigen Kohlenwasserstoffrest mit 1 bis 18 Kohlenstoffatomen stehen;
- Y¹ und Y², die gleich oder verschieden sind, jeweils einer der nachstehenden Formeln entsprechen: 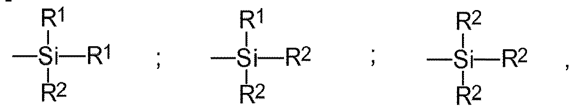 in denen:
- die Reste R¹, die substituiert oder unsubstituiert und gleich oder voneinander verschieden sind, für eine C₁-C₁₈-Alkyl-, C₅-C₁₈-Cycloalkyl- oder C₆-C₁₈-Arylgruppe stehen;
- die Reste R², die substituiert oder unsubstituiert und gleich oder voneinander verschieden sind, für eine Hydroxyl-, C₁-C₁₈-Alkoxy- oder C₅-C₁₈-Cycloalkoxygruppe stehen.

7. Kautschukzusammensetzung nach Anspruch 6, wobei Z¹ und Z² aus der Gruppe bestehend aus C₁-C₁₀-Alkylengruppen, vorzugsweise C₁-C₄-Alkylengruppen, ausgewählt sind.

8. Kautschukzusammensetzung nach Anspruch 7, wobei Z¹ und Z² für Propylen stehen.

9. Zusammensetzung nach einem der Ansprüche 6 bis 8, wobei die Reste R¹ aus C₁-C₄-Alkylgruppen ausgewählt sind und vorzugsweise für Methyl stehen.

10. Zusammensetzung nach einem der Ansprüche 6 bis 9, wobei die Reste R² aus der Gruppe bestehend aus Hydroxyl und C₁-C₄-Alkoxygruppen und vorzugsweise aus der Gruppe bestehend aus Hydroxyl, Methoxy und Ethoxy ausgewählt sind.

11. Zusammensetzung nach einem der vorhergehenden Ansprüche, wobei der Gesamtgehalt an Kupplungsmittel zwischen 2 und 20 Gew.-%, bezogen auf die Menge an verstärkendem anorganischem Füllstoff liegt und dieser Gehalt vorzugsweise weniger als 15 % beträgt.

12. Zusammensetzung nach einem der vorhergehenden Ansprüche, wobei der Gesamtgehalt an Kupplungsmittel zwischen 2 und 15 phe und vorzugsweise zwischen 2 und 12 phe liegt.

13. Kautschukzusammensetzung nach einem der vorhergehenden Ansprüche, die ein Bedeckungsmittel aus der Gruppe bestehend aus hydroxylgruppenhaltigen oder hydrolysierbaren Silanen, Polyolen, Polyethern, Estern, Aminen, hydroxylgruppenhaltigen oder hydrolysierbaren Polysiloxanen und Mischungen derartiger Verbindungen umfasst.

14. Zusammensetzung nach Anspruch 11, wobei es sich bei dem Bedeckungsmittel um ein α,ω-(Dihydroxy)-polyorganosiloxan handelt.

15. Reifen oder Halbzeug, umfassend eine Kautschukzusammensetzung nach einem der Ansprüche 1 bis 12.

16. Reifenlauffläche, umfassend eine Kautschukzusammensetzung nach einem der Ansprüche 1 bis 12.

## Claims

1. Tyre rubber composition based on at least one diene elastomer, an inorganic filler as reinforcing filler, a coupling agent providing the bonding between the inorganic filler and the diene elastomer, **characterized in that** the coupling agent is an azosilane compound is chosen from the following compounds :
(EtO)(RO)₂Si-CH₂-CH₂-CH₂-NH-CO-N=N-CO-NH-CH₂-CH₂-CH₂-Si(EtO)(RO)₂,
(RO)(EtO)₂Si-CH₂-CH₂-CH₂-NH-CO-N=N-CO-NH-CH₂-CH₂-CH₂-Si(RO)(EtO)₂
wherein Et=ethyl and R=C₁₃H₂₇(OCH₂CH₂)₅.

2. Composition according claim 1, in which the diene elastomer is chosen from the group consisting of polybutadienes, synthetic polyisoprenes, natural rubber, butadiene copolymers, isoprene copolymers and the mixtures of these elastomers.

3. Composition according to any one of the preceding claims, the inorganic filler being a filler of the siliceous or aluminous type.

4. Composition according to any one of the preceding claims, in which the amount of reinforcing inorganic filler is greater than 50 phr, and preferably less than 140 phr.

5. Composition according to any one of Claims 1 to 4, comprising a second coupling agent.

6. Composition according to Claim 5, wherein the second coupling agent being a silane sulfide compound corresponding to the formula (II):
(II) Y¹ - Z¹ - Sₓ - Z² - Y²
in which:
- x is a number from 2 to 8, preferably from 2 to 5;
- Z¹ and Z², which are identical or different, each represent a divalent hydrocarbon radical comprising from 1 to 18 carbon atoms;
- Y¹ and Y², which are identical or different, each correspond to one of the following formulae: 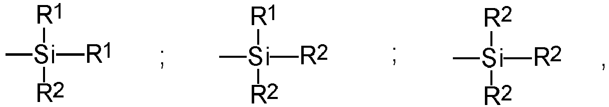 in which
- the R¹ radicals, which are unsubstituted or substituted and identical to or different from one another, represent a C₁-C₁₈ alkyl, C₅-C₁₈ cycloalkyl or C₆-C₁₈ aryl group;
- the R² radicals, which are unsubstituted or substituted and identical to or different from one another, represent a hydroxyl, C₁-C₁₈ alkoxyl or C₅-C₁₈ cycloalkoxyl group.

7. Rubber composition according to Claim 6, wherein Z¹ and Z² being chosen from the group consisting of C₁-C₁₀ alkylenes, preferably C₁-C₄ alkylenes.

8. Rubber composition according to claim 7, Z¹ and Z² representing propylene.

9. Composition according to any one of Claims 6 to 8, wherein the R¹ radicals being chosen from C₁-C₄ alkyls, preferably representing methyl.

10. Composition according to any one of claims 6 to 9; wherein the R² radicals being chosen from the group consisting of hydroxyl and C₁-C₄ alkoxyls, preferably from the group consisting of hydroxyl, methoxyl and ethoxyl.

11. Composition according to any one of the preceding claims, in which the overall content of coupling agent represents between 2% and 20% by weight, preferably less than 15% by weight, with respect to the amount of reinforcing inorganic filler.

12. Composition according to any one of the preceding claims, in which the overall content of coupling agent is between 2 and 15 phr, preferably between 2 and 12 phr.

13. Composition according to any one of the preceding claims, comprising a covering agent selected from the group consisting of hydroxylated or hydrolysable silanes, polyols, polyethers, esters, amines, hydroxylated or hydrolysable polysiloxanes, and the mixtures of such compounds.

14. Composition according to claim 11, the covering agent being an α,ω-(dihydroxy)-polyorganosiloxane oil.

15. Tyre or semi-finished product, comprising a rubber composition according to any one of Claims 1 to 12.

16. Tyre tread, comprising a rubber composition according to any one of Claims 1 to 12.
